# FASCICULE DE BREVET EUROPEEN

(11) **EP 0 830 519 B1**
(45) Date de publication et mention de la délivrance du brevet: **24.10.2001**
(21) Numéro de dépôt: 96915074.7
(22) Date de dépôt: 23.04.1996
(51) Int. Cl.: F16D 65/097

(54) **FREIN A DISQUE UTILISANT UN PATIN SOLLICITE EN ROTATION**
SCHEIBENBREMSE MIT ROTATORISCH VORGESPANNTEM BREMSSSCHUH
DISC BRAKE USING A ROTATIONALLY BIASED PAD

(30) Priorité: 08.06.1995 FR 9506744
(43) Date de publication de la demande: 25.03.1998
(73) Titulaire: Bosch Systemes de Freinage, 93700 Drancy (FR)
(72) Inventeur: MERY, Jean-Claude, F-93320 Pavillons-sous-Bois (FR); MALIGNE, Jean-Charles, F-93300 Aubervilliers (FR)
(74) Mandataire: Bentz, Jean-Paul
(86) Numéro de dépôt international: FR9600615
(87) Numéro de publication internationale: WO9641966

(56) Documents cités:
- EP-A- 0 112 255
- EP-A- 0 331 884
- DE-A- 2 451 604

## Description

La présente invention concerne un frein à disque pour véhicule à moteur, comprenant : deux éléments de frein mobiles l'un par rapport à l'autre, dont l'un est un étrier chevauchant un disque de frein, et dont l'autre est une chape fixée au véhicule; des moyens de serrage comprenant un nez d'étrier constitué par une conformation plane de l'étrier ménagée en regard d'une première face du disque, et un cylindre lié à l'étrier et fermé par un piston tourné vers une seconde face du disque; des moyens de guidage permettant un coulissement de l'étrier par rapport à la chape sous l'effet d'une sollicitation des moyens de serrage; et des premier et second patins de friction respectivement tournés vers les première et seconde faces du disque, enserrés entre le piston et le nez d'étrier, et déplacés suivant une direction axiale du piston par sollicitation des moyens de serrage jusqu'à être appliqués sur le disque; chacun des deux patins présentant deux faces sensiblement planes dont la première est partiellement recouverte d'un matériau de friction, et deux oreilles latérales; les première et seconde oreilles du premier patin coopérant avec des premier et second supports respectifs de la chape; et le premier patin portant, sur sa seconde face, un ressort allongé à deux branches principales, orienté suivant une direction tangentielle du disque, destiné à assurer le maintien du premier patin sur le nez d'étrier, et enserrant élastiquement le nez d'étrier entre des extrémités libres respectives de ses deux branches et la seconde face du premier patin.

Des dispositifs conformes à cette définition, qui englobe un certain nombre de freins à disques, sont bien connus dans l'art antérieur, comme le montrent par exemple les documents US-4 082 166 et EP-A-0 112 255.

L'un des problèmes qui se posent dans les freins à disque, en particulier ceux qui utilisent des patins du type précédemment identifié, réside dans la difficulté de donner au patin, et en particulier au patin dit "extérieur" qui est à distance du piston, une position prédéterminée et reproductible.

Cette difficulté est particulièrement gênante dans le cas où le patin est accroché à la chape et/ou supposé être en appui permanent sur elle, une mauvaise position du patin par rapport à la chape provoquant alors au freinage un régime transitoire à la fois bruyant et inefficace.

L'invention se situe dans ce contexte et a pour but de proposer un dispositif de freinage qui, bien que de structure simple, assure au patin extérieur une position prédéterminée et reproductible par rapport à la chape.

A cette fin, le frein de l'invention, par ailleurs conforme au préambule ci-dessus, est essentiellement caractérisé en ce que les extrémités des deux branches principales du ressort pointent vers le nez d'étrier et sont en appui élastique sur des surfaces d'appui respectives du nez d'étrier, en ce que les surfaces d'appui sont inclinées à la fois par rapport à la direction axiale du piston et par rapport à la première face du disque, et en ce que les surfaces d'appui présentent des pentes contraires par rapport à la direction axiale du piston, de manière à transformer partiellement l'appui élastique des extrémités libres des branches du ressort sur les surfaces d'appui en un couple sollicitant le premier patin en rotation autour d'un axe parallèle à la direction axiale du piston

Par exemple, les surfaces d'appui peuvent être formées par des versants de deux gorges en "V" respectives creusées dans le nez de l'étrier, et les extrémités libres des branches du ressort sont de préférence taillées en pointe à bout arrondi.

Les caractéristiques de l'invention sont particulièrement utiles dans un frein tel que la première oreille latérale du premier patin au moins, et le premier support de la chape, présentent des profils partiellement complémentaires assurant l'accrochage du premier patin par rapport à la chape, et tel que la seconde oreille latérale du premier patin au moins, et le second support de la chape, présentent des plages respectives en contact l'une avec l'autre et assurant un appui permanent du premier patin sur la chape.

Selon un mode de réalisation possible de l'invention, les oreilles latérales du premier patin peuvent être arrondies.

Quel que soit le mode de réalisation, il peut être avantageux de prévoir en outre que le ressort comporte une branche additionnelle prenant appui sur le nez d'étrier pour solliciter le premier patin en translation.

D'autres caractéristiques et avantages de l'invention ressortiront clairement de la description qui en est faite ci-après, à titre indicatif et nullement limitatif, en référence aux dessins annexés, dans lesquels:
- la figure 1 est une vue de dessus d'un frein à disque conforme à l'invention;
- la figure 2 est une vue de face du frein à disque de la figure 1, vu suivant l'incidence repérée par les flèches 2-2 de la figure 1;
- la figure 3 est une vue analogue à celle la figure 2, ne s'en distinguant que par le fait qu'elle illustre, de façon moins complète et plus schématique, un autre mode de réalisation d'un frein à disque conforme à l'invention;
- la figure 4 est une vue en coupe partielle réalisée suivant les flèches 4-4 de la figure 3 et agrandie;
- la figure 5 est une vue agrandie du ressort illustré sur la figure 3; et
- la figure 6 est une vue en coupe partielle réalisée suivant les flèches 6-6 de la figure 3 et agrandie.

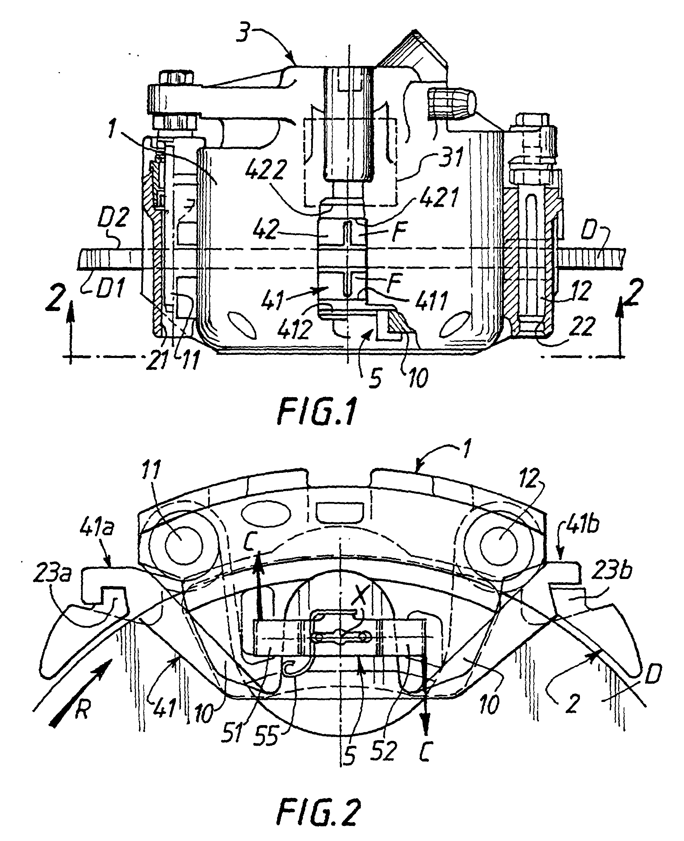

Comme le montrent notamment les figures 1 et 2, l'invention concerne de façon générale un frein à disque, un tel frein comprenant classiquement : deux éléments de frein mobiles l'un par rapport à l'autre, dont l'un est un étrier 1 chevauchant un disque de frein D, et dont l'autre est une chape 2 fixée au véhicule; des moyens de serrage comprenant un nez d'étrier 10 constitué par une conformation plane de l'étrier ménagée en regard d'une première face D1 du disque D, et un cylindre 3 lié à l'étrier 1 et fermé par un piston 31 tourné vers une seconde face D2 du disque D; des moyens de guidage, tels que des colonnettes 11, 12 liées à l'étrier et coulissant dans des alésages 21, 22 de la chape, pour permettre un coulissement de l'étrier 1 par rapport à la chape 2 sous l'effet d'une sollicitation des moyens de serrage; et des premier et second patins de friction 41 et 42.

Ces premier et second patins de friction 41 et 42 sont respectivement tournés vers les première et seconde faces D1 et D2 du disque D (figure 1), sont enserrés entre le piston 31 et le nez 10 de l'étrier 1, et sont suceptibles d'être déplacés suivant la direction axiale A du piston 31, par une augmentation de pression dans le cylindre 3, grâce à laquelle le piston 31 d'une part, et le nez 10 de l'étrier 1 d'autre part les appliquent sur le disque D.

Chaque patin, tel que 41 ou 42, comporte deux faces sensiblement planes telles que 411, 412, et 421, 422, dont la première 411, 421 est partiellement recouverte, dans une plage centrale, d'un matériau de friction F (figure 1).

Chaque patin comporte en outre, de part et d'autre de cette plage centrale, deux oreilles latérales, telles que 41a et 41b, les oreilles du premier patin au moins coopérant avec des supports respectifs 23a, 23b de la chape 2.

En outre, le premier patin 41 porte, sur sa seconde face 412, un ressort allongé 5, à deux branches principales 51 et 52, orienté suivant une direction tangentielle du disque D, destiné à assurer le maintien du premier patin 41 sur le nez d'étrier 10, et enserrant élastiquement le nez d'étrier 10 entre des extrémités libres respectives 510, 520 de ses deux branches et la seconde face 412 de ce premier patin.

Il est important pour l'invention que le ressort 5 soit rendu solidaire de la seconde face 412 du premier patin 41 d'une façon qui interdit toute rotation relative de ce ressort et de ce patin, et par exemple au moyen de deux points d'ancrage 53, 54 distants l'un de l'autre.

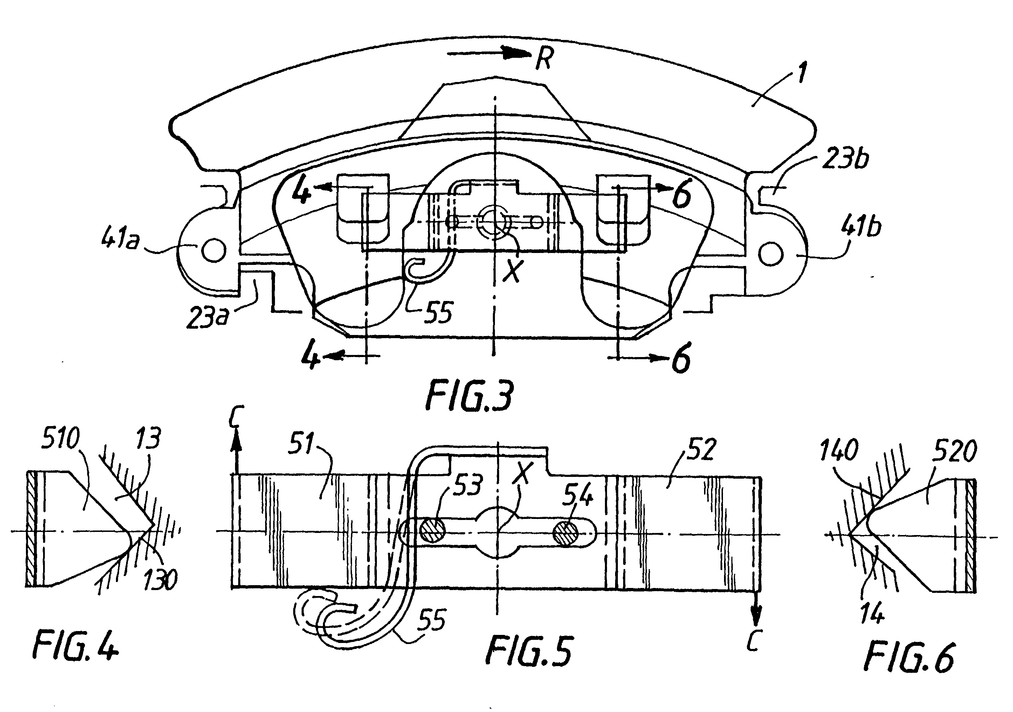

Selon l'invention, les extrémités 510, 520 des deux branches principales 51, 52 du ressort 5 pointent vers le nez d'étrier 10 (figures 4 et 6) et sont en appui élastique sur des surfaces d'appui respectives 130, 140 du nez d'étrier 10.

Par ailleurs, ces surfaces d'appui 130, 140 sont inclinées à la fois par rapport à la direction axiale A du piston et par rapport à la première face D1 du disque, et présentent des pentes contraires par rapport à la direction axiale A du piston, de manière à transformer partiellement l'appui élastique des extrémités libres 510, 520 des branches 51, 52 du ressort 5 sur les surfaces d'appui 130, 140 en un couple C-C sollicitant le premier patin 41 en rotation autour d'un axe X parallèle à la direction axiale A du piston, et en l'occurrence confondu avec l'axe du piston sur les figures 2 et 3.

Comme le montrent les figures 4 et 6, les surfaces d'appui 130, 140 peuvent être adéquatement formées par des versants de deux gorges en "V" respectives, 13 et 14, creusées dans le nez de l'étrier 10.

En outre, les extrémités libres 510, 520 des branches principales 51, 52 du ressort 5 sont de préférence taillées en pointe à bout arrondi pour pouvoir mieux glisser sur les surfaces d'appui 130, 140.

L'invention est particulièrement avantageuse dans le cas, illustré sur les figures 2 et 3, où la première oreille latérale 41a du premier patin 41 au moins, et le premier support 23a de la chape 2, présentent des profils partiellement complémentaires assurant l'accrochage du premier patin 41 par rapport à la chape 2, et où la seconde oreille latérale 41b du premier patin 41 au moins, et le second support 23b de la chape 2, présentent des plages respectives en contact l'une avec l'autre et assurant un appui permanent du premier patin sur la chape.

En effet, dans une telle configuration, dans laquelle le disque D est supposé avoir un sens de rotation privilégié indiqué par la flèche R, le couple C-C qui sollicite le premier patin 41 en rotation autour de l'axe X a pour effet de confirmer le maintien, par la chape, de chacune des deux extrémités de ce patin.

A titre indicatif, et comme montré sur la figure 3, les oreilles latérales 41a, 41b du premier patin au moins peuvent être arrondies.

Quelle que soit la forme de ces oreilles, il peut en outre être avantageux, comme illustré aux figures 2, 3, et 5, que le ressort 5 comporte une branche additionnelle 55 prenant appui sur le nez d'étrier 10 pour solliciter le premier patin 41 en translation et confirmer ses contacts avec la chape.

## Revendications

1. Frein à disque pour véhicule à moteur, comprenant : deux éléments de frein (1, 2) mobiles l'un par rapport à l'autre, dont l'un est un étrier (1) chevauchant un disque de frein (D), et dont l'autre est une chape (2) fixée au véhicule; des moyens de serrage comprenant un nez d'étrier (10) constitué par une conformation plane de l'étrier ménagée en regard d'une première face (D1) du disque, et un cylindre (3) lié à l'étrier et fermé par un piston (31) tourné vers une seconde face (D2) du disque (D); des moyens de guidage (11, 21; 12, 22) permettant un coulissement de l'étrier par rapport à la chape sous l'effet d'une sollicitation des moyens de serrage; et des premier et second patins de friction (41, 42) respectivement tournés vers les première et seconde faces (D1, D2) du disque, enserrés entre le piston et le nez d'étrier, et déplacés suivant une direction axiale (A) du piston par sollicitation des moyens de serrage jusqu'à être appliqués sur le disque; chacun des deux patins présentant deux faces (411, 412) sensiblement planes dont la première (411) est partiellement recouverte d'un matériau de friction (F), et deux oreilles latérales (41a, 41b); les première et seconde oreilles (41a, 41b) du premier patin (41) coopérant avec des premier et second supports respectifs (23a, 23b) de la chape; et le premier patin (41) portant, sur sa seconde face (412), un ressort allongé (5) à deux branches principales (51, 52), orienté suivant une direction tangentielle du disque, destiné à assurer le maintien du premier patin (41) sur le nez d'étrier (10), et enserrant élastiquement le nez d'étrier entre des extrémités libres respectives (510, 520) de ses deux branches et la seconde face (412) du premier patin, **caractérisé en ce que** les extrémités (510, 520) des deux branches principales du ressort pointent vers le nez d'étrier et sont en appui élastique sur des surfaces d'appui respectives (130, 140) du nez d'étrier, **en ce que** les surfaces d'appui (130, 140) sont inclinées à la fois par rapport à la direction axiale (A) du piston et par rapport à la première face (D1) du disque, et **en ce que** les surfaces d'appui (130, 140) présentent des pentes contraires par rapport à la direction axiale (A) du piston, de manière à transformer partiellement l'appui élastique des extrémités libres des branches du ressort sur les surfaces d'appui en un couple (C-C) sollicitant le premier patin (41) en rotation autour d'un axe (X) parallèle à la direction axiale (A) du piston.

2. Frein à disque suivant la revendication 1, **caractérisé en ce que** lesdites surfaces d'appui (130, 140) sont formées par des versants de deux gorges en "V" respectives (13, 14) creusées dans le nez de l'étrier (10).

3. Frein à disque suivant la revendication 1 ou 2, **caractérisé en ce que** lesdites extrémités libres (510, 520) des branches du ressort (5) sont taillées en pointe à bout arrondi.

4. Frein à disque suivant l'une quelconque des revendications 1 à 3, **caractérisé en ce que** la première oreille latérale (41a) du premier patin au moins, et le premier support (23a) de la chape, présentent des profils partiellement complémentaires assurant l'accrochage du premier patin par rapport à la chape, **en ce que** la seconde oreille latérale (41b) du premier patin au moins, et le second support (23b) de la chape, présentent des plages respectives en contact l'une avec l'autre et assurant un appui permanent du premier patin sur la chape.

5. Frein à disque suivant l'une quelconque des revendications 1 à 4, **caractérisé en ce que** les oreilles latérales (41a, 41b) du premier patin au moins sont arrondies.

6. Frein à disque suivant l'une quelconque des revendications 1 à 5, **caractérisé en ce que** le ressort comporte une branche additionnelle (55) prenant appui sur le nez d'étrier (10).

## Claims

1. Disk brake for a motor vehicle, comprising: two brake elements (1, 2) which can move with respect to each other, one of which is a caliper (1) straddling a brake disk (D) and the other of which is a carrier (2) fixed to the vehicle; clamping means comprising a tip (10) of a caliper, the tip consisting of a flat shaping of the caliper formed facing a first face (D1) of the disk, and a cylinder (3) connected to the caliper and closed by a piston (31) turned toward a second face (D2) of the disk (D); guide means (11, 21; 12, 22) allowing the caliper to slide with respect to the carrier under the effect of urging from the clamping means; and first and second friction pads (41, 42) turned respectively toward the first and second faces (D1, D2) of the disk, clamped between the piston and the tip of the caliper and moved in an axial direction (A) of the piston by urging from the clamping means until they are applied against the disk; each of the two pads exhibiting two substantially flat faces (411, 412), the first (411) of which is partially covered with a friction material (F), and two lateral lugs (41a, 41b) ; the first and second lugs (41a, 41b) of the first pad (41) interacting with first and second respective supports (23a, 23b) of the carrier; and the first pad (41) carrying, on its second face (412), an elongate spring (5), with two main branches (51, 52), which points in a tangential direction of the disk and is intended to hold the first pad (41) on the tip (10) of the caliper and elastically clamps the tip of the caliper between the respective free ends (510, 520) of its two branches and the second face (412) of the first pad, **characterized in that** the ends (510, 520) of the two main branches of the spring point toward the tip of the caliper and bear elastically against respective bearing surfaces (130, 140) of the tip of the caliper, **in that** the bearing surfaces (130, 140) are inclined both with respect to the axial direction (A) of the piston and with respect to the first face (D1) of the disk, and **in that** the bearing surfaces (130, 140) exhibit opposite slopes with respect to the axial direction (A) of the piston, so as partially to convert the elastic bearing of the free ends of the branches of the spring on the bearing surfaces into a torque (C-C) urging the first pad (41) to rotate about an axis (X) parallel to the axial direction (A) of the piston.

2. Disk brake according to Claim 1, **characterized in that** the said bearing surfaces (130, 140) are formed by the edges of two respective V-shaped grooves (13, 14) cut in the tip (10) of the caliper.

3. Disk brake according to Claim 1 or 2, **characterized in that** the said free ends (510, 520) of the branches of the spring (5) are cut into a point with a rounded end.

4. Disk brake according to any one of Claims 1 to 3, **characterized in that** the first lateral lug (41a) of the first pad at least, and the first support (23a) of the carrier, exhibit partially complementary profiles which fasten the first pad with respect to the carrier, **in that** the second lateral lug (41b) of the first pad at least, and the second support (23b) of the carrier, exhibit respective regions in contact with each other and ensuring that the first pad bears continuously against the carrier.

5. Disk brake according to any one of Claims 1 to 4, **characterized in that** the lateral lugs (41a, 41b) of the first pad at least are rounded.

6. Disk brake according to any one of Claims 1 to 5, **characterized in that** the spring includes an additional branch (55) bearing against the tip (10) of the caliper.

## Patentansprüche

1. Scheibenbremse für Motorfahrzeuge, umfassend: zwei Bremselemente (1, 2), die zueinander beweglich sind und von denen das eine ein Bremssattel (1) ist, der eine Bremsscheibe (D) umgreift, und das andere ein Bremsträger (2), der am Fahrzeug befestigt ist; Spannmittel mit einem Bremssattelvorsprung (10), der aus einer gegenüber einer ersten Seite (D1) der Scheibe angeordneten flachen Ausformung des Bremssattels besteht und einem Zylinder (3), der mit dem Bremssattel verbunden und von einem Kolben (31) verschlossen ist, der einer zweiten Seite (D2) der Scheibe (D) zugewandt ist; Führungsmittel (11, 21; 12, 22), die unter der Wirkung einer Beaufschlagung der Spannmittel ein Gleiten des Bremssattels bezüglich des Bremsträgers ermöglichen; einen ersten und einen zweiten Reibbelag (41, 42), die der ersten bzw. der zweiten Seite (D1, D2) der Scheibe zugewandt sind, zwischen dem Kolben und dem Bremssattelvorsprung eingespannt sind und entlang einer axialen Richtung (A) des Kolbens durch Beaufschlagung der Spannmittel soweit verlagert werden, daß sie sich an die Scheibe anlegen; wobei jeder der beiden Reibbeläge zwei Seiten (411, 412), die im wesentlichen eben ausgeführt sind und von denen die erste (411) teilweise von einem Reibmaterial (F) bedeckt ist, und zwei seitliche Ohren (41a, 41b) aufweist; wobei das erste und das zweite Ohr (41a, 41b) des ersten Belags (41) mit einem ersten bzw. einem zweiten Auflager (23a, 23b) des Bremsträgers zusammenwirkt; wobei der erste Belag (41) an seiner zweiten Seite (412) eine langgestreckte Feder (5) mit zwei Hauptschenkeln (51, 52) trägt, die entlang einer tangentialen Richtung der Scheibe ausgerichtet ist, dazu bestimmt ist, den Halt des ersten Belags (41) an dem Bremssattelvorsprung (10) zu gewährleisten, und den Bremssattelvorsprung federnd zwischen den jeweiligen freien Enden (510, 520) ihrer beiden Schenkel und der zweiten Seite (412) des ersten Belags einzuspannen, **dadurch gekennzeichnet, daß** die Enden (510, 520) der beiden Hauptschenkel der Feder zum Bremssattelvorsprung hin ausgerichtet sind und sich federnd an den jeweiligen Anlageflächen (130, 140) des Bremssattelvorsprungs abstützen, daß die Anlageflächen (130, 140) zugleich bezüglich der axialen Richtung (A) des Kolbens und der ersten Seite (D1) der Scheibe geneigt sind und daß die Anlageflächen (130, 140) gegensinnige Neigungen bezüglich der axialen Richtung (A) des Kolbens aufweisen, so daß sie die federnde Anlage der freien Enden der Federschenkel an den Anlageflächen teilweise in ein Drehmoment (C-C) umsetzen, das den ersten Belag (41) in Drehung um eine Achse (X) beaufschlagt, die parallel zur axialen Richtung (A) des Kolbens ist.

2. Scheibenbremse nach Anspruch 1, **dadurch gekennzeichnet, daß** die genannten Anlageflächen (130, 140) jeweils durch die Schrägflächen zweier V-förmiger Nuten (13, 14) gebildet sind, die in dem Bremssattelvorsprung (10) ausgeführt sind.

3. Scheibenbremse nach Anspruch 1 oder 2, **dadurch gekennzeichnet, daß** die genannten freien Enden (510, 520) der Schenkel der Feder (5) konisch zulaufen und mit einer Abrundung enden.

4. Scheibenbremse nach einem der Ansprüche 1 bis 3, **dadurch gekennzeichnet, daß** das erste seitliche Ohr (41a) zumindest des ersten Belags und das erste Auflager (23a) des Bremsträgers teilweise komplementär ausgebildete Profile aufweisen, die ein Einhaken des ersten Belags am Bremsträger gewährleisten, daß das zweite seitliche Ohr (41b) zumindest des ersten Belags und das zweite Auflager (23b) des Bremsträgers jeweilige Bereiche aufweisen, die miteinander in Kontakt stehen und eine ständige Anlage des ersten Belags am Bremsträger gewährleisten.

5. Scheibenbremse nach einem der Ansprüche 1 bis 4, **dadurch gekennzeichnet, daß** die seitlichen Ohren (41a, 41b) zumindest des ersten Belags abgerundet sind.

6. Scheibenbremse nach einem der Ansprüche 1 bis 5, **dadurch gekennzeichnet, daß** die Feder einen zusätzlichen Schenkel (55) enthält, der sich an dem Bremssattelvorsprung (10) abstützt.
